# FASCICULE DE BREVET EUROPEEN

(11) **EP 1 150 138 B1**
(45) Date de publication et mention de la délivrance du brevet: **23.01.2008**
(21) Numéro de dépôt: 01400989.8
(22) Date de dépôt: 18.04.2001
(51) Int. Cl.: G01V 1/22, G01V 1/26

(54) **Methode et système de synchronisation des éléments d'un dispositif sismique utilisant un réseau de transmission standard et une référence temporelle externe**
Verfahren und Anordnung zur Synchronisierung von Elementen einer seismischen Anordnung unter Benutzung eines seismischen Übertragungsnetzes und einer externen Zeitreferenz
Method and system for synchronisation of elements of a seismic system using a standard transmission network and an external time reference

(30) Priorité: 28.04.2000 FR 0005598
(43) Date de publication de la demande: 31.10.2001
(73) Titulaire: Institut Français du Pétrole, 92852 Rueil-Malmaison Cedex (FR)
(72) Inventeur: Bary, Rénate, 92500 Rueil-Malmaison (FR); Guion, Michel, 92800 Puteaux (FR); Thierry, Gérard, 92000 Nanterre (FR)

(56) Documents cités:
- FR-A- 2 538 194
- FR-A- 2 770 732
- GB-A- 2 333 841

## Description

La présente invention concerne une méthode et un système de transmission qui utilisant un réseau de transmission standard, pour relier entre eux des éléments d'un dispositif sismique, permet de transmettre avec précision un signal indicatif d'un instant initial.

Le système de transmission selon l'invention peut trouver des utilisations dans de nombreux domaines où l'on a à synchroniser entre elles des stations éloignées sans pour cela utiliser nécessairement des moyens de communication dédiés.

C'est le cas dans le domaine de la prospection sismique où l'on enregistre les signaux reçus par des récepteurs sismiques répartis à la surface du sol par exemple, renvoyés par les discontinuités du sous-sol en réponse à l'émission d'ondes sismiques par une source vibratoire ou impulsionnelle. On utilise des ensembles de collecte de données sismiques comprenant un grand nombre d'unités d'acquisition réparties sur le site exploré, adaptées à collecter (amplifier, filtrer, numériser et mémoriser) les signaux. Les données mémorisées sont transmises à une station centrale de commande et d'enregistrement depuis chaque unité d'acquisition à intervalles fixes (par exemple après chaque cycle d'émission-réception, à l'issue de chaque session journalière, etc.) ou « au fil de l'eau », dès qu'un intervalle de temps de transmission est disponible, soit directement soit via des stations intermédiaires ou concentrateurs. Des systèmes d'acquisition sismique sont décrits par exemple dans les brevets FR 2 511 772 (US 4 583 206) ou FR 2 538 194 (US 4 628 494), FR 2 666 946 (US 5 245 647), FR 2 692 384 (US 5 550 787), FR 2 696 839 (US 5 706 250), FR 2 710 757 (US 5 563 847), FR 2 720 518 (US 5 822 273), FR 2 766 580.

Il importe que toutes les unités d'acquisition réparties sur le site exploré puissent se synchroniser sur un instant initial commun, généralement l'instant de déclenchement de la source sismique, ceci quel que soit leur éloignement par rapport à la station centrale qui leur transmet le signal indicatif et quelle que soit la voie de transmission utilisée à cet effet, faute de quoi les combinaisons des données centralisées sont rendues très imprécises.

On connaît des méthodes et dispositifs permettant un recalage parfait en temps de stations éloignées sur une station centrale communiquant par le biais de voies de communication, dès l'instant que l'on a pu mesurer le temps de propagation des signaux sur ces voies.

Par le brevet FR 2.538.194 (US 4,628,494) du demandeur par exemple, on connaît une méthode pour synchroniser l'acquisition de signaux sismiques par une unité d'acquisition sur le terrain, avec un instant initial tel que l'instant (TB) de déclenchement d'une source sismique dans le cas où l'on connaît la durée de propagation Δt jusqu'à elle du signal indicatif de cet instant, par une voie de transmission telle qu'un câble ou un canal radio. La méthode consiste essentiellement à envoyer un pré-signal lançant l'acquisition des signaux issus des récepteurs sismiques et leur mémorisation dans une mémoire locale. Quand le signal de synchronisation émis postérieurement est reçu à l'unité d'acquisition à un instant t, on va rechercher dans la mémoire locale tous les échantillons mémorisés depuis l'instant (t - Δt) i.e. l'instant initial.

Par la demande brevet FR 98/15.792, on connaît une méthode et un dispositif permettant également de produire pour chaque signal sismique, une série d'échantillons de ces signaux, rééchelonnée depuis un instant initial, à partir d'une première série d'échantillons numérisés de ce signal sismique produits depuis un instant initial quelconque antérieur à l'instant initial, connaissant l'écart de temps effectif entre ces deux instants. La méthode comporte la détermination de coefficients d'un filtre numérique propre à compenser la partie fractionnaire de l'écart de temps effectif mesuré, et l'application de ce filtre numérique de compensation à la première série d'échantillons, permettant d'obtenir une série d'échantillons numérisés rééchelonnée depuis l'instant initial.

Cependant, ces techniques de repérage et de recalage connues ne sont applicables que si on connaît avec une égale précision le temps de propagation de signaux de synchronisation au travers les stations émettrices et réceptrices en raison du fait que la gestion des transferts est assurée par voie logicielle, notamment dans le cadre d'une gestion multi-tâches, surtout si l'on considère que l'incertitude sur le temps de propagation effectif dans un système de transmission sismique tel que ceux évoqués plus haut par exemple ne doit pas dépasser quelque 50 µs.
- La transmission sans décalage de temps plus ou moins aléatoire est possible et plus facile à mettre en oeuvre quand on est propriétaire du réseau que l'on utilise et maître de la forme des signaux émis ainsi que du mode de codage. Lorsque le signal TB marquant l'instant effectif d'émission par la source arrive dans la station centrale, il est possible par des circuits adaptés, d'injecter ce signal directement sur la voie de communication qui la relie à la station réceptrice et d'échapper à d'éventuels retards non constants apportés par l'informatique de gestion des stations à la prise en compte.
- Les réseaux de communication standards sont avantageux. Ils permettent des transmissions à débit élevé, ils sont relativement simples à utiliser et évolutifs. Mais ils fonctionnent suivant un protocole de communication particulier avec des circuits de contrôle et de commande spécialisés auxquels ils faut s'adapter si l'on veut transmettre avec précision des signaux représentatifs d'instants initiaux.
- C'est le cas dans le système décrit dans la demande de brevet FR 99/12.113 du demandeur, où l'on utilise un réseau de communication standard de type Ethernet par exemple, pour relier entre elles, une station centrale de commande et d'enregistrement sismique et des stations dépendantes : stations locales intermédiaires de contrôle et de concentration, des unités locales d'acquisition et leur transmettre un signal de synchronisation (TB). Le temps de transit des données sur les voies de transmission entre la station centrale et les unités d'acquisition étant mesuré au préalable, on prédéclenche l'acquisition des données sismiques par les unités d'acquisition, l'intervalle de temps de garde par rapport à l'instant de réception du signal de synchronisation étant fixe et supérieur au temps de transit. On applique au signal de synchronisation dans la station intermédiaire, un retard de compensation ajusté pour tenir compte des fluctuations du temps de transfert effectif liées à son passage par des moyens de contrôle multi-tâches des stations intermédiaires et le réseau de transmission pour respecter l'intervalle de temps de garde. De cette façon, on arrive à synchroniser parfaitement toutes les unités d'acquisition.
- Cette méthode convient parfaitement lorsque le temps de transit via la voie de transmission est constant et peut être mesuré au préalable, ce qui est le cas avec un réseau de communication standard comportant des liaisons matérielles (réseau Ethernet filaire à faible débit par exemple).
- En revanche, dans tout autre cas où le temps de transit sur la voie disponible du réseau standard (liaison radio par exemple) est susceptible de fluctuer dans un intervalle de temps incompatible avec la précision requise pour la transmission d'un signal de synchronisation tel qu'un TB, les moyens de compensation du système antérieur s'avèrent insuffisants.

### La méthode et le système selon l'invention

- La méthode de transmission selon l'invention permet l'utilisation d'un réseau standard de communication pour transférer des données de synchronisation entre une station centrale de commande et d'enregistrement sismique et des stations dépendantes (des unités locales d'acquisition de traitement et de transmission de données sismiques, dépendant de la station centrale soit directement soit via une ou plusieurs stations locales intermédiaire de contrôle et de concentration, elle-même reliée à des unités locales d'acquisition), dans tous les cas où le temps de transmission sur les voies de liaison entre les éléments est susceptibles de fluctuations trop importantes.
- Dans son principe, la solution retenue consiste essentiellement à munir les stations communiquantes d'une référence temporelle commune qui peut être par exemple délivrée par des récepteurs de signaux transmis par un réseau de positionnement par satellite d'un type connu tel que le système GPS ou la fréquence porteuse d'un émetteur hertzien et à utiliser cette référence commune pour calculer le temps de transmission vrai et recaler localement l'instant initial d'acquisition sismique.
- La méthode de transmission selon l'invention permet de transférer, par un réseau standard de communication (LAN), un signal de synchronisation marquant un instant initial (TB) entre une station centrale de commande et d'enregistrement sismique (CCU) et des unités d'acquisition et de mémorisation de signaux sismiques (RTU) répartis sur le terrain, quand le temps de transit du signal de synchronisation sur au moins une partie des voies de liaison du réseau standard entre la station centrale et au moins une station dépendante (qui peut être une station intermédiaire (RRS), elle-même reliée par câbles ou fibres à des unités d'acquisition sur le terrain (RTU) ou bien éventuellement chaque unité d'acquisition dans les configurations où elles sont sous le contrôle direct de la station centrale) est susceptible de fluctuations à l'intérieur d'une marge de fluctuation déterminée.

La méthode comporte :
- une phase d'apprentissage incluant la formation d'une trame spécifique et sa mémorisation par chacune des stations, et la détection dans chacune des dites stations dépendantes, de signaux délivrés par une horloge extérieure au dispositif ;
- le prédéclenchement de l'acquisition des données sismiques par les unités d'acquisition (RTU) avec un intervalle de temps de garde par rapport à l'instant de réception du signal de synchronisation (TB) qui est fixe et supérieur au temps de transit maximal compte-tenu de la marge de fluctuations ;
- une première datation précise de l'instant initial (TB) d'après l'horloge extérieure et la transmission des données obtenues par cette première datation sous la forme de la trame spécifique vers les stations dépendantes ;
- la détection de l'instant d'arrivée à chaque station dépendante de la trame spécifique et une deuxième datation de cet instant d'arrivée d'après l'horloge extérieure ; et
- la mesure du temps de transit effectif égal à l'intervalle de temps entre les données associées à la première datation et celles associées à la deuxième datation et le recalage en conséquence de l'instant initial sur les données simiques mémorisées dans les unités d'acquisition (RTU).

L'instant de prédéclenchement est par exemple l'instant de transmission à une source sismique (S) d'un ordre de tir.

Dans le cas où la (ou chaque) station dépendante est une station locale (RRS) reliée à au moins une unité d'acquisition (RTU) par une liaison matérielle à temps de transit fixe, et à la station centrale (CCU) par une liaison à temps de transit fluctuant, on applique un recalage sur les données sismiques mémorisées dans les unités d'acquisition (RTU) tenant compte du temps de transit fixe.

La méthode comporte par exemple :
- la détection directe dans la station centrale (CCU) du signal de synchronisation (TB) ;
- la formation à partir du signal de synchronisation détecté, de la trame spécifique et son application directe à un module d'interface (TCI) de la station centrale (CCU) ;
- la détection dans un module d'interface (TCI) de chaque station dépendante, d'une trame spécifique du signal de synchronisation (TB) ; et
- l'application au signal de synchronisation (TB) dans la station dépendante, d'un décalage de temps égal au temps de transit mesuré.

La méthode est particulièrement souple en ce qu'elle permet, par le biais d'une compensation ajustable en temps de délais de transmission, de prendre en compte facilement la diversité des débits de transfert de données des voies de transmission disponibles dans un système de transmission complexe comme on en utilise par exemple dans les dispositifs de prospection sismique modernes.

Le système de transmission selon l'invention permet de transférer, par un réseau standard de communication (LAN), un signal de synchronisation marquant un instant initial (TB) entre une station centrale de commande et d'enregistrement sismique (CCU) et des unités d'acquisition et de mémorisation de signaux sismiques (RTU) répartis sur le terrain, quand le temps de transit du signal de synchronisation sur au moins une partie des voies de liaison du réseau standard entre la station centrale et au moins une station dépendante est susceptible de fluctuations à l'intérieur d'une marge de fluctuation déterminée. Le système comporte :
- des moyens de formation d'une trame spécifique, des moyens de mémorisation par chacun des éléments du dispositif sismique de cette trame spécifique, et une horloge locale (RXGPS) pilotée par des signaux de synchronisation fournis par la dite horloge extérieure (H), pour générer une échelle de temps de datation, cette horloge locale étant associée aux éléments du dispositif sismique ;
- des moyens pour prédéclencher dans les unités d'acquisition (RTU) l'acquisition des données sismiques avec un intervalle de temps de garde par rapport à l'instant de réception du signal de synchronisation (TB) qui est fixe et supérieur au temps de transit maximal compte-tenu de la marge de fluctuations ;
- des moyens de comptage associés à chaque horloge locale pour effectuer une première datation précise de l'instant initial (TB) en accord avec l'horloge extérieure et des moyens de transmission des données obtenues par cette première datation sous la forme de la trame spécifique vers les stations dépendantes ;
- des moyens de détection de l'instant d'arrivée à chaque station dépendante de la trame spécifique et des moyens de comptage associés à l'horloge locale pour effectuer une deuxième datation de l'instant d'arrivée en accord avec l'horloge extérieure (H) ; et
- des moyens de comptage pour déterminer le temps de transit effectif égal à l'intervalle de temps entre les données associées à la première datation et celles associées à la deuxième datation et des moyens pour recaler en conséquence, l'instant initial sur les données sismiques mémorisées dans les unités d'acquisition (RTU).

Le système comporte par exemple un ensemble d'interface (TBG/I) dans la station centrale (CCU) pour générer directement sur une voie de transmission vers chaque station dépendante une trame portant les données de la première datation, un ensemble d'interface (TBD/I) pour décoder la dite trame spécifique, des moyens de comptage (D-CPT) pour effectuer la deuxième datation en accord avec l'horloge extérieure (H) et déterminer le temps de transit effectif des signaux de synchronisation.

Dans le cas où la (ou chaque) station terminale est une station locale (RRS), celle-ci comporte un générateur (SYNCTB-G) pour engendrer un signal (SYNCTB) synchrone au signal retardé vers les unités d'acquisition (RTU).

L'horloge extérieure commune est constituée par exemple de signaux de synchronisation émis par un système de positionnement par satellite, chaque élément du dispositif sismique comportant un module de détection approprié.

L'horloge extérieure commune peut également être constituée par exemple de signaux de synchronisation émis par un émetteur hertzien, chaque élément du dispositif sismique comportant un module de détection approprié.

Cette combinaison d'un temps de garde fixe appliqué par toutes les unités d'acquisition et de moyens d'ajustement intermédiaires de retard adaptés à compléter les temps de propagation mesurés sur les voies de transmission par référence à une horloge extérieure, permet à tous les unités d'acquisition de se caler toutes ensemble sur un même instant initial.

Que le temps de transmission par le réseau soit connu ou non avec précision, il est possible de combiner un tel réseau avec des voies de transmission dédiés classiques par fibre optique, radio ou câble, tout en préservant le synchronisme parfait entre ces différentes voies.

D'autres caractéristiques et avantages de la méthode et du système selon l'invention, apparaîtront à la lecture de la description ci-après d'un exemple non limitatif de réalisation, en se référant aux dessins annexés où :
- la Fig.1 montre schématiquement un dispositif sismique positionné sur le terrain avec différentes possibilités de voies de transmission entre les éléments ;
- la Fig.2 montre schématiquement une station locale RRS de concentration ;
- la Fig.3 montre schématiquement la station centrale générale CCU ;
- la Fig.4 montre schématiquement un module de concentration DCU à l'intérieur d'une station locale RRS ;
- la Fig.5 est un schéma synoptique illustrant le déroulement dans la station centrale CCU, des opérations d'émission du signal de synchronisation TB ;
- la Fig.6 est un schéma synoptique illustrant le déroulement, dans une station locale RRS, des opérations de réception et d'ajustement de retard du signal de synchronisation TB ;
- la Fig.7 montre schématiquement un circuit d'interface TBI adaptable selon les cas à la détection ou à la génération d'une trame caractérisant le signal de synchronisation ; et
- la Fig.8 est un synoptique général de gestion logicielle des fonctions remplies par une station locale.

### DESCRIPTION DETAILLEE

La méthode et le système selon l'invention va être décrite dans le cadre particulier d'une application à un dispositif de prospection sismique, déjà décrit notamment dans les brevets FR 2 692 384, FR 2 696 239 et FR 2 720 518 déjà cités.

### I) Dispositif sismique

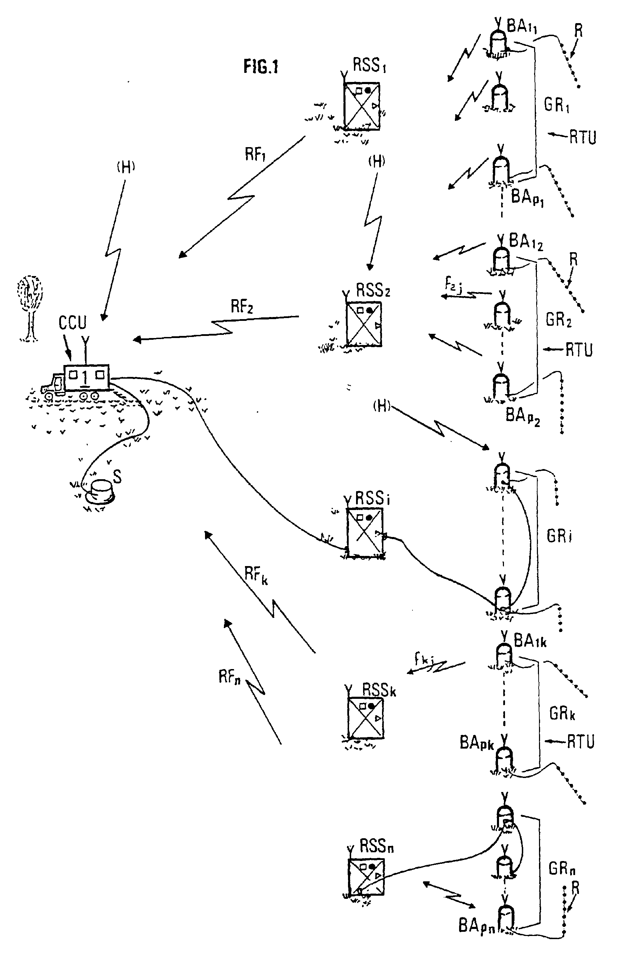

Le dispositif sismique comporte (Fig.1) un ensemble souvent considérable (de plusieurs centaines à plusieurs milliers) de récepteurs sismiques R produisant chacun une "trace sismique" en réponse à la transmission dans le sol d'ondes sismiques produites par une source S couplée avec le sol et renvoyées par des discontinuités du sous-sol. Les récepteurs R sont subdivisés en n groupes GR1, GR2, ..., GRn. comprenant chacun un certain nombre q de récepteurs R. Des unités locales d'acquisition et de transmission RTU référencées BA11, ... BAp1, ... BApk, ... BApn analogues par exemple à celles décrites dans le brevet FR 2 720 518 déjà cité, sont placées sur le terrain, chacune pour numériser et mémoriser temporairement les données sismiques recueillies par un ou plusieurs récepteurs R de chaque groupe. Un groupe quelconque GRk d'ordre k par exemple, comporte un certain nombre q de récepteurs connectés respectivement à p unités d'acquisition locales RTU référencées BA1k, BApk par exemple. Les nombres p et q peuvent être différents si une partie au moins des unités locales RTU (BAp2 par exemple sur la Fig.1) est chargée de collecter les données sismiques issues de plus d'un récepteur sismique R. Le dispositif sismique peut ainsi comporter par exemple plusieurs centaines d'unités locales RTU.

Les différents groupes d'unités d'acquisition RTU sont respectivement sous le contrôle de stations locales RRS de contrôle et de concentration référencées RRS1, RRS2 ...RRSi,... RRSk, ... RRSn. Ces stations locales sont équipées pour réaliser des fonctions étendues :
- contrôler les unités d'acquisition RTU de leurs groupes respectifs ;
- collecter les données sismiques (traces sismiques) des différentes unités RTU, les stocker sur une mémoire de masse (un ou plusieurs disques par exemple) ;
- transférer sur commande à la station centrale CCU au moins une partie des données stockées : soit des paramètres indicatifs du bon fonctionnement des unités d'acquisition ou des stations locales (RRS), soit une partie au moins éventuellement compressée de chaque trace sismique, dans le but d'effectuer un contrôle de qualité ;
- gérer des opérations de test et d'initialisation sur les moyens de liaison (lignes ou canaux hertziens) ainsi que sur les équipements de terrain (récepteurs sismiques, électronique dans chaque unité d'acquisition RTU), surveiller le bon déroulement d'opérations sismiques, et rendre compte sur commande des résultats et des anomalies éventuelles.

Les différents concentrateurs RRS, comme la source S, sont placés sous le contrôle d'une station centrale de pilotage et d'enregistrement CCU où sont finalement regroupées toutes les données sismiques. Les stations locales RRS communiquent avec la station centrale CCU par un réseau local LAN d'un type connu (Ethernet^{™} par exemple) comportant des liaisons matérielles (câble ou fibre optique L) ou des liaisons radio RF₁, RF₂, ... RFₙ, ce réseau fonctionnant suivant un protocole de transmission propre.

### II) Stations locales de contrôle et concentration (RRS)

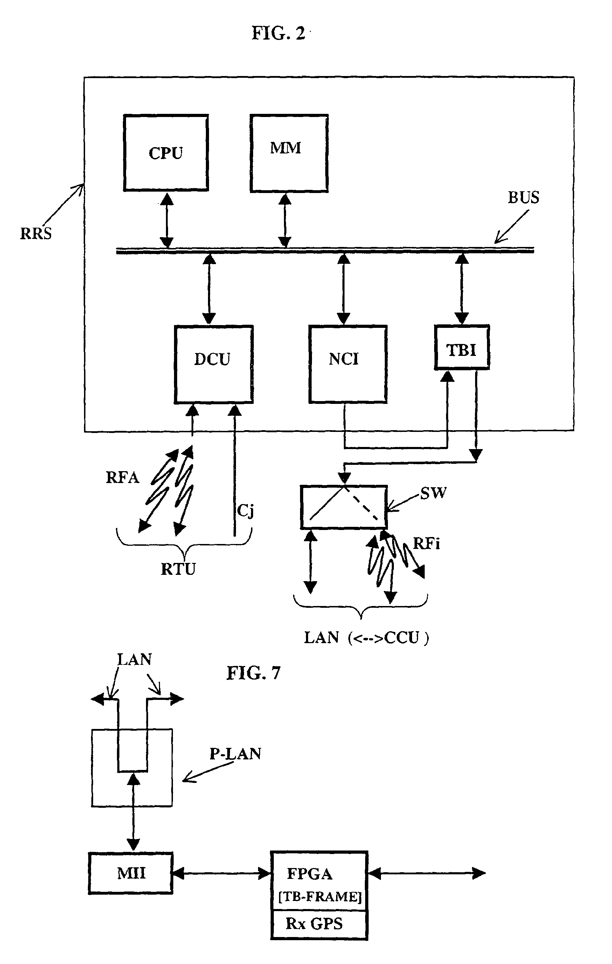

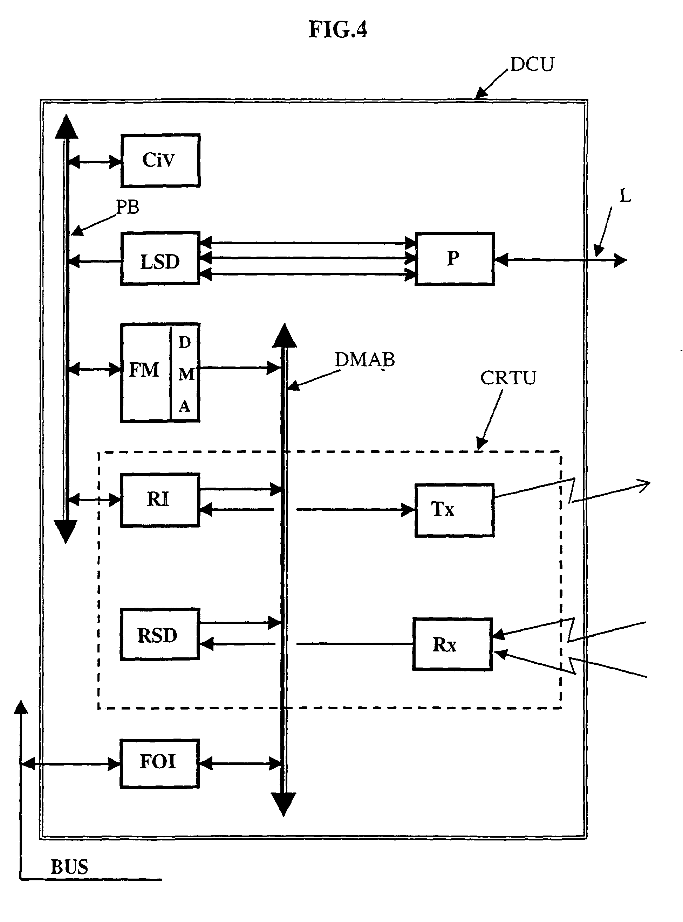

Chaque station locale RRS comporte (Fig.2) une unité centrale CPU avec une mémoire RAM étendue (32 Mo par exemple), communiquant par un bus interne BUS avec une mémoire de masse MM de plusieurs Go, et une unité de concentration DCU (cf. Fig.4) affectée à gérer les communications de chaque station locale RRS avec les unités locales RTU d'acquisition soit par canaux hertziens Fₖⱼ, et/ou par câbles ou lignes de transmission Ci.

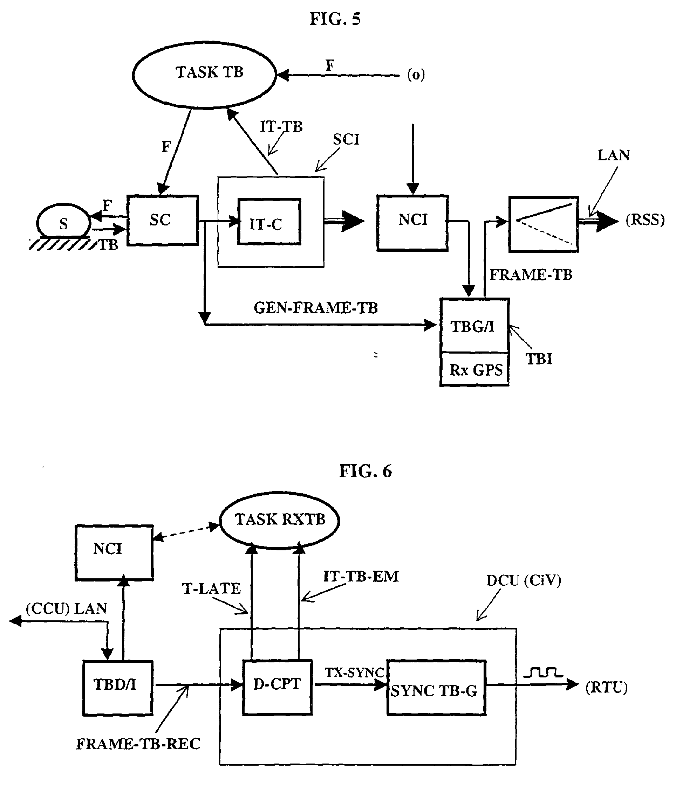

Sur le bus interne BUS, est également connecté un ensemble d'interface NCI. Le réseau LAN comprenant une ou plusieurs lignes L et/ou des voies de transmission radio RFB, utilisé pour la communication avec l'unité centrale CCU, est connecté à l'ensemble d'interface NCI par l'intermédiaire d'un commutateur de voies SW.Une interface TBI de détection sur le réseau LAN des signaux indicatifs de l'instant initial de déclenchement de la source sismique S, est connecté à l'ensemble d'interface NCI d'une part et au bus interne BUS. Les fonctionnalités des éléments NCI et TBI seront décrites plus avant en relation avec les Fig.5 et 6.

### III) Station centrale de commande CCU

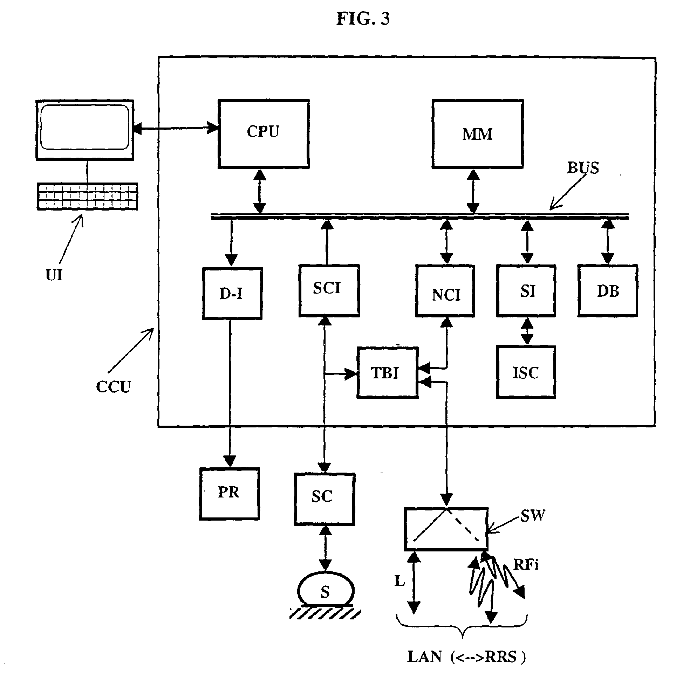

La station centrale CCU comporte elle aussi une unité centrale CPU pourvue d'une mémoire RAM étendue communiquant par un bus interne BUS avec une mémoire de masse MM de forte capacité suffisante pour enregistrer les traces sismiques transmises par les unités d'acquisition via les unités de commande et de concentration RRS (voir Fig. 3). Elle comporte également un terminal local de dialogue UI pour les interventions de l'opérateur; une imprimante PR permettant de tracer avec une haute définition des coupes sismiques, des cartographies, etc., qui est reliée au bus interne BUS par une carte d'interface DI. Une mémoire de masse de grande capacité DB pour mémoriser une base de données constituée avec des données sismiques, géographiques etc., également connectée au bus interne BUS. A ce même bus, par l'intermédiaire d'un élément d'interface, est connecté un scanner d'images ISC utilisé pour entrer dans la base de données de la mémoire DB éventuellement une carte de géographie de la zone où l'on effectue les opérations sismiques. Une telle image de la zone d'opérations peut être utilisée pour faire correspondre les points d'implantation des capteurs de terrain avec des coordonnées géographiques précises.

La source sismique S est contrôlée par un boîtier de commande SC, formant, à son déclenchement, un signal indicatif TB qui est appliqué à l'unité centrale CCU par l'intermédiaire d'une carte d'interface SCI.

Sur le bus interne BUS, est également connecté un ensemble NCI d'interface adaptée spécifiquement au contrôle du réseau LAN. Le réseau local LAN (lignes L et/ou voies de transmission radio Rfi) utilisé pour les liaisons avec chaque station locale RRS, est connecté à l'ensemble d'interface NCI par l'intermédiaire d'un commutateur de voies SW. Un circuit d'interface TBI est interposé en dérivation entre les éléments d'interface NCI et SCI. Les fonctionnalités des éléments NCI et TBI seront également décrites plus avant en relation avec les Fig.5, 6 et 7.

Le module de concentration DCU de chaque station locale RRS (Fig.4), est destiné à relayer la transmission des commandes de l'unité de commande CPU vers les stations locales RRS et en sens inverse, la réception des données sismiques. Il comporte deux cartes électroniques. Une première carte porte un ensemble CiV dont les fonctions seront précisées en relation avec la Fig.5 un circuit de détection synchrone de ligne LSD qui communique par des ports d'entrée/sortie P avec une ou plusieurs lignes de transmission Ci pour la communication avec les unités d'acquisition RTU sur le terrain (Fig.1). Une deuxième carte porte des modules de mémoires FM avec DMA, accessibles par l'intermédiaire d'un bus interne DMAB. Le circuit d'interface FOI permet des échanges entre le bus d'échange DMAB et l'unité centrale CPU (Fig.2) par l'intermédiaire du bus interne BUS. Les trois premières cartes CPU, LSD, FM communiquent par un bus interne PB.

Chaque unité de concentration DCU comporte une unité d'émission-réception radio CRTU, analogue à celle décrite dans le brevet FR 2 720 518 précité, qui est adaptée, quand ce mode de liaison est établi, à établir des communications par voie hertzienne avec les unités locales RTU. Cette unité CRTU comporte (Fig.4) un circuit d'interface RI connecté au bus d'échange DMAB, au bus interne PB et à un transmetteur radio Tx émettant par exemple suivant le mode TFM (Tamed Frequency Modulation) bien connu des spécialistes et un circuit de détection synchrone de modulations hertziennes RSD, connecté à un récepteur de radio Rx.

### IV) Programmation des activités par tâches

Comme décrit aussi dans le brevet FR 2 720 518 précité, les différentes activités permettant le bon déroulement des processus, sont fractionnées en tâches répertoriées, dédiées chacune à un processus spécifique, qui se présentent chacune sous la forme de programmes intégrés aux ordinateurs dans la station centrale CCU 1, dans les stations locales RRS et les unités locales RTU.

Les tâches peuvent être réalisées en séquence ou bien mises en concurrence par des commutations. Un programme de répartition en temps réel gère le lancement ou l'interruption des tâches en tenant compte de leurs degrés de priorité respectifs ou leur reprise quand elles ont été interrompues a) faute de disposer à un instant de leur exécution de toutes les données nécessaires, ou b) à la réception d'un message d'interruption issu d'une autre tâche ou bien c) consécutif à un événement extérieur.

Pour définir une tâche, on tient compte de sa fonction, de toutes les données nécessaires à son exécution, des programmes de pilotage (drivers) requis, de toutes les interruptions que la tâche impose et de son degré de priorité préétabli.

Les tâches peuvent accéder à une base de données constituée de paramètres introduites par l'opérateur, des données sismiques acquises et des paramètres de contrôle du système sismique.

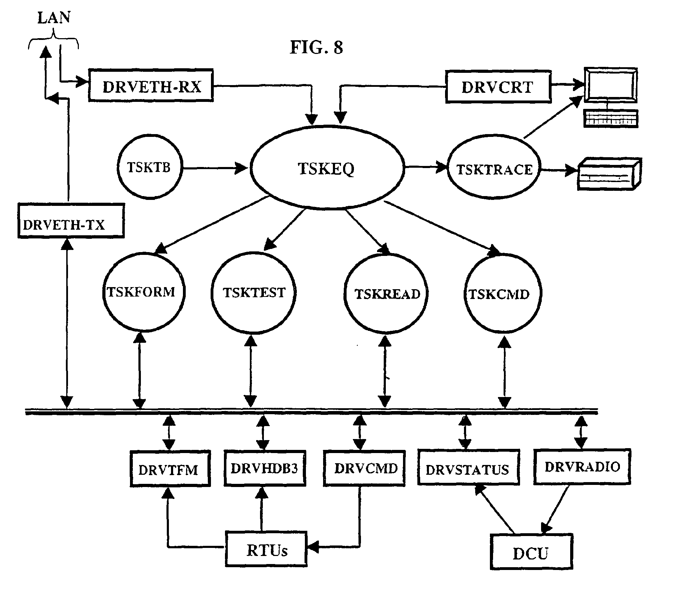

Les relations d'interdépendance des différentes tâches réalisées par chaque station locale de commande et de concentration RRS par exemple, sont représentées sur le diagramme de la Fig. 8.

### V) Transmission du signal de synchronisation TB par le réseau local LAN.

La transmission sans retard et de manière répétitive aux stations dépendantes (stations locales intermédiaires RRS ou directement aux unités d'acquisition RTU dans le cas où elles seraient reliées directement à la station centrale CCU), du signal TB indicatif de l'instant précis de déclenchement de la source S (instant de « tir »), est effectuée en respectant les règles de fonctionnement suivantes :

Aucun trafic n'a lieu sur l'ensemble du réseau LAN pendant la durée de déclenchement du tir.

Si le temps de transfert effectif des signaux sur chacune des voies de transmission du réseau LAN entre la station centrale CCU et les stations dépendantes est bien constant et reproductible : liaisons par câbles, fibres optiques etc., on le mesure avec précision une fois pour toutes à la connexion de chaque station dépendante au réseau LAN, comme décrit dans la demande de brevet FR 99/12.113 déjà citée.

Si le temps de transfert effectif de ces signaux est fluctuant mais inférieur à une valeur limite connue : cas de liaisons sans fil par exemple, on utilise des signaux d'horloge fournis par une référence temporelle extérieure accessible par tous les éléments du dispositif sismique (système de datation) accessible au lieu où s'effectuent les opérations sismiques, comme on va le décrire ci-après.

Il peut s'agir par exemple de signaux d'horloge émis à intervalles réguliers (toutes les secondes par exemple) par un système de repérage tel que le système GPS (Global Positioning System) ou bien de signaux de synchronisation émis par une station de radio et calés sur une horloge atomique, ces signaux de synchronisation étant captés par des récepteurs spécialisés associés aux éléments du dispositif sismique.

L'émission du signal TB des stations locales RRS sur les câbles les reliant aux unités d'acquisition RTU dans la configuration schématisée à la Fig.1, est retardée d'un délai fixe connu. Ce délai qui tient compte de l'ensemble des temps de transit dans le système de transmission et des marges de fluctuation admises, est connu par les unités d'acquisition RTU.

Lorsque le signal TB est reçu par les boîtiers d'acquisition RTU, l'acquisition du signal sismique a déjà démarré auparavant sur un pré-signal de démarrage (Pré-TB). Comme déjà décrit dans le brevet FR 2 666 946, les échantillons sismiques acquis sont rangés dans une mémoire tampon des unités d'acquisition RTU qui a une taille suffisante pour contenir tous les échantillons acquis durant un intervalle de temps entre le pré-signal et le premier des échantillons à conserver, acquis postérieurement à l'instant initial de référence.

Cet intervalle de temps est choisi par convention supérieur au temps maximal de propagation des signaux sur les voies physiques de transmission que l'on est amené à utiliser tout en restant compatible avec la taille des mémoires-tampons. Comme la durée de transmission réelle du signal de synchronisation est susceptible de fluctuer quand on utilise, comme il est courant, des micro-ordinateurs multi-tâches ou des moyens de transmission divers : fibres optiques, câbles ou voies hertziennes, la méthode va comporter si nécessaire l'application de retards intermédiaires modulables (par utilisation de compteurs retardeurs) destinés à compléter les retards intangibles (temps de propagation mesurés une fois pour toutes au moment de l'installation du dispositif sismique sur le terrain) ou les retards mesurés par référence à une échelle de temps commune, pour que toutes les unités d'acquisition RTU, soient toutes ensemble bien synchrones avec l'instant initial à l'issue de cet intervalle de temps.

### V-1 Dans la station centrale CCU

La datation ou chronométrage d'événements est basée sur la reconnaissance d'une trame particulière émise, qui nécessite une phase d'apprentissage préalable. La trame de référence FRAME-TB est émise par la station centrale et mémorisée dans l'ensemble TBG/I de l'interface TBI. C'est cette trame qui va ensuite être émise dès la réception du signal de synchronisation TB marquant le début de l'acquisition sismique.

La phase d'apprentissage préalable de la trame de référence quelle que soit sa forme dans le protocole spécifique de transmission, permet de s'adapter automatiquement à tout changement éventuel du réseau standard LAN utilisé.

Le déroulement des opérations de la séquence de « tir » dans la station est le suivant :

L'opérateur O déclenche le tir sismique (Fig.5) et le signal correspondant F est envoyé à une tâche TB de la station centrale CCU ;

Un signal de pré-déclenchement est transmis par le réseau LAN vers les stations locales RRS qui le répercutent vers les unités d'acquisition RTU. A la réception de ce signal, les unités d'acquisition commencent à acquérir les signaux émanant des récepteurs sur le terrain et les rangent dans une mémoire-tampon.

La tâche TB émet un signal F qui est relayé vers la source S par son boîtier de contrôle SC, provoquant ainsi son déclenchement ;

Cet instant de déclenchement est signalé à la station centrale CCU par un signal TB ;

Le signal TB est envoyé à un contrôleur d'interruptions IT-C dans le module d'interface SCI, ce qui provoque l'interruption de la tâche logicielle en cours et la prise en compte quasi immédiate d'un signal d'interruption IT-TB. La tâche TB prend en compte le signal IT-TB pour contrôler le bon déroulement des opérations. Le boîtier de contrôle SC produit en parallèle un signal GEN-TRAME-TB. Le circuit d'interface TBI comporte un ensemble TBG/I connecté sur le réseau LAN entre l'interface de contrôle du réseau NCI et le commutateur SW et adapté à y générer une trame TB-FRAME (cf. Fig.7).

Le récepteur du système de repérage GPS produisant des signaux à intervalles d'une seconde, on lui associe un compteur de datation ou chronométrage alimenté par une horloge interne à 1 MHz par exemple, destiné à fournir une échelle de temps intermédiaire (période 1 µs) ce qui permet de dater tout événement se produisant dans chaque intervalle. L'émission de chaque signal GPS provoque l'initialisation du compteur de datation. La valeur affichée par le compteur TBDATE est mémorisée à la réception du signal GEN-FRAME-TB.

A la réception du signal GEN-FRAME-TB, la valeur TBDATE du compteur de datation est prélevée et insérée dans la trame de référence FRAME-TB et transmise sans délai vers les stations dépendantes : unités d'acquisition ou stations intermédiaires

### V-2 Dans les stations locales RRS

L'interface TBD/I (du type décrit à la Fig.7) est connectée sur le réseau LAN entre le commutateur SW et l'interface de contrôle du réseau NCI pour détecter la trame spécifique du TB. L'ensemble DCU dans chaque station locale RRS comporte, dans l'ensemble CiV (cf. Fig.4) un compteur D-CPT de temps de retard et un générateur SYNCTB-G produisant un signal de trame synchrone au signal TB.

La tâche RXTB (Fig.6) initialise le compteur D-CPT avec le délai de retard fixe prédéterminé supérieur à la durée de propagation sur toutes les voies de liaison utilisées.

L'étape d'apprentissage est identique à celle décrite pour la station centrale.

Dès la réception de la trame Pré-TB, l'interface de détection de trame TB surveille le trafic sur la liaison physique pour détecter la trame TB ;

Dès que la trame TB est détectée, l'interface TBD/I prélève la valeur du compteur de datation TBDATE1 de la station RRS, extrait de la trame la valeur TBDATE et la soustrait de TBDATE1. La valeur obtenue est appliquée au compteur D-CPT pour ajuster le temps de retard de l'émission du signal SYNCTB vers les unités d'acquisition RTU. Le signal FRAME-TB-REC démarre ensuite le compteur D-CPT.

La fin de comptage du compteur D-CPT provoque l'émission d'un signal TX-SYNC vers un circuit SYNCTB-G dans le DCU qui génère un signal SYNCTB qui est alors transmis effectivement vers des boîtiers d'acquisition. A l'arrêt du compteur D-CPT, un signal IT-TB-EM est émis vers la tâche RXTB pour signaler la fin de traitement du TB.

Le DCU comporte également un compteur (non représenté) permettant de délimiter un créneau de temps (signal T-LATE) à l'issue duquel si aucun signal de TB n'est détecté, on annule la procédure d'attente en cours.

L'organisation des tâches dans chaque station locale RRS est schématisée sur la Fig.8. Les différentes abréviations utilisées pour désigner les éléments et les tâches signifient respectivement :
- DRVETH : pilote (driver) du réseau local ;
- DRVCRT : pilote de console ;
- TSKTB : tâche de TB ;
- TSKSEQ : tâche de séquencement ;
- TSKTRACE : tâche de mémorisation des traces sismiques sur une mémoire de masse ;
- TSKFORM : tâche de contrôle de l'installation de l'équipement de terrain ;
- TSKTEST : tâche de test ;
- TSKREAD : tâche de lecture des données ;
- TSKCMD : tâche d'émission des commandes ;
- DRVTFM : pilote de réception radio ;
- DRVHDB3 : pilote de réception sur les lignes ;
- DRVCMD : pilote d'émission des commandes ;
- DRSSTATUS : pilote d'état (status) ; et
- DRVRADIO : pilote des liaisons radio.

On a décrit des modes de réalisation où le réseau standard LAN servait à relier la station centrale avec les stations intermédiaires. On ne sortirait pas du cadre de l'invention bien entendu et on utiliserait la même technique dans le cas où les stations dépendantes sur le réseau LAN seraient les unités d'acquisition RTU.

Il est bien évident également que la technique de mesure du délai de prise en compte du signal de synchronisation TB et de compensation ajustable de retard de transmission peut être appliquée si l'on utilise un réseau dit propriétaire au lieu d'un réseau standard de type LAN.

## Revendications

1. Méthode de transmission pour transférer, par un réseau standard de communication (LAN), un signal de synchronisation marquant un instant initial (TB) entre une station centrale de commande et d'enregistrement sismique (CCU) et des unités d'acquisition et de mémorisation de signaux sismiques (RTU) répartis sur le terrain, quand le temps de transit du signal de synchronisation sur au moins une partie des voies de liaison du réseau standard entre la station centrale et au moins une station dépendante est susceptible de fluctuations à l'intérieur d'une marge de fluctuation déterminée, **caractérisée en ce qu'**il comporte :
- une phase d'apprentissage incluant la formation d'une trame spécifique et sa mémorisation par chacune des stations, et la détection dans chacune des dites stations dépendantes, de signaux délivrés par une horloge extérieure au dispositif;
- le prédéclenchement de l'acquisition des données sismiques par les unités d'acquisition (RTU) avec un intervalle de temps de garde par rapport à l'instant de réception du signal de synchronisation (TB) qui est fixe et supérieur au temps de transit maximal compte-tenu de la marge de fluctuations ;
- une première datation précise de l'instant initial (TB) d'après l'horloge extérieure et la transmission des données obtenues par cette première datation sous la forme de la trame spécifique vers les stations dépendantes ;
- la détection de l'instant d'arrivée à chaque station dépendante de la trame spécifique et une deuxième datation de cet instant d'arrivée d'après l'horloge extérieure ; et
- la mesure du temps de transit effectif égal à l'intervalle de temps entre les données associées à la première datation et celles associées à la deuxième datation et le recalage en conséquence de l'instant initial sur les données simiques mémorisées dans les unités d'acquisition (RTU).

2. Méthode selon la revendication 1, **caractérisée en ce que** l'instant de prédéclenchement est l'instant de transmission à une source sismique (S) d'un ordre de tir.

3. Méthode selon l'une des revendications précédentes, **caractérisée en ce que** la dite station dépendante est une station locale (RRS) reliée à au moins une unité d'acquisition (RTU) par une liaison matérielle à temps de transit fixe, et à la station centrale (CCU) par une liaison à temps de transit fluctuant, le recalage opéré sur les données sismiques mémorisées dans les unités d'acquisition (RTU) tenant compte du temps de transit fixe.

4. Méthode selon l'une des revendications 1 ou 2, **caractérisée en ce que** la dite station dépendante est une unité d'acquisition (RTU).

5. Méthode selon l'une des revendications précédentes, **caractérisée en ce qu'**elle comporte :
- la détection directe dans la station centrale (CCU) du signal de synchronisation (TB) ;
- la formation à partir du signal de synchronisation détecté, de la trame spécifique et son application directe à un module d'interface (TCI) de la station centrale (CCU) ;
- la détection dans un module d'interface (TCI) de chaque station dépendante, d'une trame spécifique du signal de synchronisation (TB) ; et
- l'application au signal de synchronisation (TB) dans la station dépendante, d'un décalage de temps égal au temps de transit mesuré.

6. Système de transmission pour un dispositif sismique permettant de transférer, par un réseau standard de communication (LAN), un signal de synchronisation marquant un instant initial (TB) entre une station centrale de commande et d'enregistrement sismique (CCU) et des unités d'acquisition et de mémorisation de signaux sismiques (RTU) répartis sur le terrain, quand le temps de transit du signal de synchronisation sur au moins une partie des voies de liaison du réseau standard entre la station centrale et au moins une station dépendante est susceptible de fluctuations à l'intérieur d'une marge de fluctuation déterminée, **caractérisée en ce qu'**il comporte :
- des moyens de formation d'une trame spécifique, des moyens de mémorisation par chacun des éléments du dispositif sismique de cette trame spécifique, et une horloge locale (RXGPS) pilotée par des signaux de synchronisation fournis par la dite horloge extérieure (H), pour générer une échelle de temps de datation, cette horloge locale étant associée aux éléments du dispositif sismique ;
- des moyens pour prédéclencher dans les unités d'acquisition (RTU) l'acquisition des données sismiques avec un intervalle de temps de garde par rapport à l'instant de réception du signal de synchronisation (TB) qui est fixe et supérieur au temps de transit maximal compte-tenu de la marge de fluctuations ;
- des moyens de comptage associés à chaque horloge locale pour effectuer une première datation précise de l'instant initial (TB) en accord avec l'horloge extérieure et des moyens de transmission des données obtenues par cette première datation sous la forme de la trame spécifique vers les stations dépendantes ;
- des moyens de détection de l'instant d'arrivée à chaque station dépendante de la trame spécifique et des moyens de comptage associés à l'horloge locale pour effectuer une deuxième datation de l'instant d'arrivée en accord avec l'horloge extérieure (H) ; et
- des moyens de comptage pour déterminer le temps de transit effectif égal à l'intervalle de temps entre les données associées à la première datation et celles associées à la deuxième datation et des moyens pour recaler en conséquence, l'instant initial sur les données simiques mémorisées dans les unités d'acquisition (RTU).

7. Système selon la revendication 6, **caractérisé en ce qu'**il comporte un ensemble d'interface (TBG/I) dans la station centrale (CCU) pour générer directement sur une voie de transmission vers chaque station dépendante, une trame portant les données de la première datation, un ensemble d'interface (TBD/I) pour décoder la dite trame spécifique, des moyens de comptage (D-CPT) pour effectuer la deuxième datation en accord avec l'horloge extérieure (H) et déterminer le temps de transit effectif des signaux de synchronisation.

8. Système selon la revendication 6 ou 7, **caractérisé en ce que** la dite station terminale est une station locale (RRS), laquelle comporte un générateur (SYNCTB-G) pour engendrer un signal (SYNCTB) synchrone au signal retardé vers les unités d'acquisition (RTU).

9. Système selon l'une des revendications 6 à 7, **caractérisé en ce que** la dite station terminale est une unité locale (RTU).

10. Système selon l'un des revendications 6 à 9, **caractérisé en ce que** chaque élément du dispositif sismique comporte un module de détection de signaux de synchronisation (H) émis par un système de positionnement par satellite.

11. Système selon l'un des revendications 6 à 9, **caractérisé en ce que** chaque élément du dispositif sismique comporte un module de détection de signaux de synchronisation (H) émis par un émetteur hertzien.

## Claims

1. A transmission method for transferring, via a standard communication network (LAN), a synchronisation signal marking an initial time (TB), between a central seismic recording and control station (CCU) and seismic signal acquisition and memorisation units (RTU) distributed over the terrain, when the transit time of the synchronisation signal, on at least a part of the connection paths of the standard network, between the central station and at least one dependent station, is susceptible to fluctuations within a determined fluctuation margin, **characterised in that** it comprises:
- a learning phase including the formation of a specific frame and its memorisation by each of the stations, and the detection, in each of said dependent stations, of signals delivered by a clock which is external to the device;
- the pre-triggering of the acquisition of the seismic data by the acquisition units (RTU) with a guard time interval, in relation to the reception time of the synchronisation signal (TB), which is fixed and is greater than the maximum transit time, taking into account the fluctuation margin;
- a first precise time-tagging of the initial time (TB) according to the external clock and the transmission of the data obtained by this first time-tagging, in the form of the specific frame, to the dependent stations;
- the detection of the arrival time, at each dependent station, of the specific frame and a second time-tagging of this arrival time according to the external clock; and
- the measuring of the effective transit time equal to the time interval between the data associated with the first time-tagging and that associated with the second time-tagging and the resetting, as a result, of the initial time, in respect of the seismic data memorised in the acquisition units (RTU).

2. The method according to Claim 1, **characterised in that** the pre-triggering time is the time of transmission to a seismic source (S) of an actuating order.

3. The method according to one of the preceding claims, **characterised in that** said dependent station is a local station (RRS), connected to at least one acquisition unit (RTU) via a hardware connection with a fixed transit time, and to the central station (CCU) via a connection with a fluctuating transit time, the resetting carried out in respect of the memorised seismic data in the acquisition units (RTU) taking into account the fixed transit time.

4. The method according to one of Claims 1 or 2, **characterised in that** said dependent station is an acquisition unit (RTU).

5. The method according to one of the preceding claims, **characterised in that** it comprises:
- the direct detection in the central station (CCU) of the synchronisation signal (TB);
- the formation, from the detected synchronisation signal, of the specific frame and its direct application to an interface module (TCI) of the central station (CCU);
- the detection, in an interface module (TCI), by each dependent station, of a specific frame of the synchronisation signal (TB); and
- the application to the synchronisation signal (TB) in the dependent station of a time lag equal to the measured transit time.

6. A transmission system for a seismic device enabling the transfer, via a standard communication network (LAN), of a synchronisation signal marking an initial time (TB), between a central seismic recording and control station (CCU) and seismic signal acquisition and memorisation units (RTU) distributed over the terrain, when the transit time of the synchronisation signal on at least a part of the connection paths of the standard network, between the central station and at least one dependent station, is susceptible to fluctuations within a determined fluctuation margin, **characterised in that** it comprises:
- means for forming a specific frame, means for the memorisation, by each of the elements of the seismic device, of this specific frame, and a local clock (RXGPS) piloted by synchronisation signals provided by said external clock (H), in order to generate a time-tagging time scale, this local clock being associated with the elements of the seismic device;
- means for pre-triggering, in the acquisition units (RTU), the acquisition of the seismic data with a guard time interval, in relation to the reception time of the synchronisation signal (TB), which is fixed and is greater than the maximum transit time, taking into account the fluctuation margin;
- counting means associated with each local clock for carrying out a first precise time-tagging of the initial time (TB) in accordance with the external clock and means for transmitting the data obtained by this first time-tagging, in the form of the specific frame, to the dependent stations;
- means for detecting the arrival time, at each dependent station, of the specific frame and counting means associated with the local clock for carrying out a second time-tagging of the arrival time in accordance with the external clock (H); and
- counting means for determining the effective transit time equal to the time interval between the data associated with the first time-tagging and that associated with the second time-tagging and means for resetting, as a result, the initial time in respect of the seismic data memorised in the acquisition units (RTU).

7. The system according to Claim 6, **characterised in that** it comprises an interface assembly (TBG/I) in the central station (CCU) in order to directly generate, on a transmission path to each dependent station, a frame carrying the data of the first time-tagging, an interface assembly (TBD/I) for decoding said specific frame, counting means (D-CPT) for carrying out the second time-tagging in accordance with the external clock (H) and determining the effective transit time of the synchronisation signals.

8. The system according to Claim 6 or 7, **characterised in that** said terminal station is a local station (RRS) which comprises a generator (SYNCTB-G) for producing a signal (SYNCTB) which is synchronous with the delayed signal going to the acquisition units (RTU).

9. The system according to one of Claims 6 to 7, **characterised in that** said terminal station is a local unit (RTU).

10. The system according to one of Claims 6 to 9, **characterised in that** each element of the seismic device comprises a module for detecting synchronisation signals (H) transmitted by a satellite positioning system.

11. The system according to one of Claims 6 to 9, **characterised in that** each element of the seismic device comprises a module for detecting synchronisation signals (H) transmitted by a wireless transmitter.

## Patentansprüche

1. Übertragungsmethode, um über ein Standard-Kommunikationsnetz (LAN) ein Synchronisationssignal, das einen Ausgangszeitpunkt (TB) kennzeichnet, zwischen einer zentralen Station zur Steuerung und seismischen Aufzeichnung (CCU) und Einheiten zur Erfassung und Speicherung von seismischen Signalen (RTU), die auf dem Gebiet verteilt sind, zu übertragen, wenn die Übergangszeit des Synchronisationssignals auf mindestens einem Teil der Verbindungswege des Standardnetzes zwischen der zentralen Station und mindestens einer abhängigen Station zu Schwankungen innerhalb einer bestimmten Schwankungsbreite fähig ist, **dadurch gekennzeichnet, dass** sie umfasst:
- eine Lernphase, die die Bildung eines spezifischen Rasters und seine Speicherung durch jede des Stationen und die Erfassung von von einer externen Zeitschaltung an die Vorrichtung gelieferten Signalen in jeder der abhängigen Stationen einschließt;
- die Vorauslösung der Erfassung der seismischen Daten durch die Erfassungseinheiten (RTU) mit einem Schutzzeitintervall zum Empfangszeitpunkt des Synchronisationssignals (TB), das fest und größer als die maximale Übergangszeit auf Grund der Schwankungsbreite ist;
- eine erste genaue Datierung des Ausgangszeitpunktes (TB) nach der externen Zeitschaltung und die Übertragung der durch diese erste Datierung erhalten Daten in Form des spezifischen Rasters zu den abhängigen Stationen;
- die Erfassung des Ankunftszeitpunktes des spezifischen Rasters an jeder abhängigen Station und eine zweite Datierung dieses Ankunftszeitpunktes nach der externen Zeitschaltung; und
- die Messung der tatsächlichen Übergangszeit gleich dem Zeitintervall zwischen den mit der ersten Datierung zusammenhängenden Daten und jenen, die mit der zweiten Datierung zusammenhängen, und die anschließende Einordnung des Ausgangszeitpunktes in den in den Erfassungseinheiten (RTU) gespeicherten seismischen Daten.

2. Methode nach Anspruch 1, **dadurch gekennzeichnet, dass** der Zeitpunkt des Vorauslösens der Zeitpunkt der Übertragung eines Sprengbefehls an eine seismische Quelle (S) ist.

3. Methode nach einem der vorhergehenden Ansprüche, **dadurch gekennzeichnet, dass** die abhängige Station eine lokale Station (RRS) ist, die mit mindestens einer Erfassungseinheit (RTU) durch eine materielle Verbindung mit fester Übergangszeit und mit der zentralen Station (CCU) durch eine Verbindung mit schwankender Übergangszeit verbunden ist, wobei die an den in den Erfassungseinheiten (RTU) gespeicherten Daten vorgenommene Einordnung die feste Übergangszeit berücksichtigt.

4. Methode nach einem der Ansprüche 1 oder 2, **dadurch gekennzeichnet, dass** die abhängige Station eine Erfassungsstation (RTU) ist.

5. Methode nach einem der vorhergehenden Ansprüche, **dadurch gekennzeichnet, dass** sie umfasst:
- die direkte Erfassung des Synchronisationssignals (TB) in der zentralen Station (CCU);
- die Bildung des spezifischen Rasters aus dem erfassten Synchronisationssignal und sein direktes Anlegen an ein Schnittstellenmodul (TCI) der zentralen Station (CCU);
- die Erfassung eines spezifischen Rasters des Synchronisationssignals (TB) in einem Schnittstellenmodul (TCI) jeder abhängigen Station; und
- das Anlegen einer Zeitverzögerung gleich der gemessenen Übergangszeit an das Synchronisationssignal (TB) in der abhängigen Station.

6. Übertragungssystem für eine seismische Vorrichtung, das es ermöglicht, über ein Standard-Kommunikationsnetz (LAN) ein Synchronisationssignal, das einen Ausgangszeitpunkt (TB) kennzeichnet, zwischen einer zentralen Station zur Steuerung und seismischen Aufzeichnung (CCU) und Einheiten zur Erfassung und Speicherung von seismischen Signalen (RTU), die auf dem Gebiet verteilt sind, zu übertragen, wenn die Übergangszeit des Synchronisationssignals auf mindestens einem Teil der Verbindungswege des Standardnetzes zwischen der zentralen Station und mindestens einer abhängigen Station zu Schwankungen innerhalb einer bestimmten Schwankungsbreite fähig ist, **dadurch gekennzeichnet, dass** es umfasst:
- Mittel zur Bildung eines spezifischen Rasters, Mittel zur Speicherung dieses spezifischen Rasters durch jedes der Elemente der seismischen Vorrichtung und eine lokale Zeitschaltung (RXGPS), die von von der externen Zeitschaltung (H) gelieferten Synchronisationssignalen gesteuert wird, um eine Datierungszeittabelle zu erstellen, wobei diese lokale Zeitschaltung mit den Elementen der seismischen Vorrichtung verbunden ist;
- Mittel zur Vorauslösung der Erfassung der seismischen Daten in den Erfassungseinheiten (RTU) mit einem Schutzzeitintervall zum Empfangszeitpunkt des Synchronisationssignals (TB), das fest und größer als die maximale Übergangszeit auf Grund der Schwankungsbreite ist;
- Zählmittel, die mit jeder lokalen Zeitschaltung verbunden sind, um einer erste genaue Datierung des Ausgangszeitpunktes (TB) in Übereinstimmung mit der externen Zeitschaltung durchzuführen, und Mittel zur Übertragung der durch diese erste Datierung erhalten Daten in Form des spezifischen Rasters zu den abhängigen Stationen;
- Mittel zur Erfassung des Ankunftszeitpunktes des spezifischen Rasters an jeder abhängigen Station und Zählmittel, die mit der lokalen Zeitschaltung verbunden sind, um eine zweite Datierung dieses Ankunftszeitpunktes in Übereinstimmung mit der externen Zeitschaltung (H) vorzunehmen; und
- Zählmittel, um die tatsächliche Übergangszeit gleich dem Zeitintervall zwischen den mit der ersten Datierung zusammenhängenden Daten und jenen, die mit der zweiten Datierung zusammenhängen, und Mittel zur anschließenden Einordnung des Ausgangszeitpunktes in den in den Erfassungseinheiten (RTU) gespeicherten seismischen Daten.

7. System nach Anspruch 6, **dadurch gekennzeichnet, dass** es eine Schnittstelleneinheit (TBG/I) in der zentralen Station (CCU), um direkt auf einem Übertragungsweg zu jeder abhängigen Station einen Raster zu erzeugen, der die Daten der ersten Datierung trägt, eine Schnittstelleneinheit (TBD/I) zum Decodieren des spezifischen Rasters, Zählmittel (D-CPT) zur Durchführung der zweiten Datierung in Übereinstimmung mit der externen Zeitschaltung (H) und zur Bestimmung der tatsächlichen Übergangszeit der Synchronisationssignale umfasst.

8. System nach Anspruch 6 oder 7, **dadurch gekennzeichnet, dass** die Endstation eine lokale Station (RRS) ist, die einen Generator (SYNCTB-G) zur Erzeugung eines Signal (SYNCTB) synchron zum verzögerten Signal zu den Erfassungseinheiten (RTU) umfasst.

9. System nach einem der Ansprüche 6 bis 7, **dadurch gekennzeichnet, dass** die Endstation eine lokale Station (RTU) ist.

10. System nach einem der Ansprüche 6 bis 9, **dadurch gekennzeichnet, dass** jedes Element der seismischen Vorrichtung ein Erfassungsmodul für Synchronisationssignale (H), die von einem Satellitenortungssystem entsandt werden, umfasst.

11. System nach einem der Ansprüche 6 bis 9, **dadurch gekennzeichnet, dass** jedes Element der seismischen Vorrichtung ein Erfassungsmodul für von einem Funksender entsandte Synchronisationssignale (H) umfasst.
